# EUROPÄISCHE PATENTANMELDUNG

(11) **EP 4 817 824 A1**
(43) Veröffentlichungstag der Anmeldung: **07.10.2026**
(21) Anmeldenummer: 25167582.3
(22) Anmeldetag: 31.03.2025
(51) Int. Cl.: B26D 1/00, B23D 65/00, B23P 15/40, B21D 53/64, B23D 61/12, B26F 1/44

(54) **BANDSTAHLMESSER UND VERFAHREN ZUR HERSTELLUNG DIESES BANDSTAHLMESSERS**

(71) Anmelder: voestalpine Precision Strip GmbH, 3333 Böhlerwerk (AT)
(72) Erfinder: HAAS, Anton, 3321 Ardagger Stift (AT); Schütt, Gerhard, 3364 Neuhofen an der Ybbs (AT)
(74) Vertreter: Jell, Friedrich

(57) **Zusammenfassung**

Die Erfindung betrifft ein Bandstahlmesser (1) und ein Verfahren zur Herstellung dieses Bandstahlmessers (1). Vergleichsweise dicke Wabenpappe kann mit diesem Bandstahlmesser (1) zuverlässig gestanzt werden, wenn der Bandkörper (5) zumindest zwei Stahlbänder (6, 7) aufweist, die mit ihren Flachseiten (6a, 7a bzw. 6b, 7b) im Wesentlichen zueinander fluchtend angeordnet sind und welche Stahlbänder (6, 7) über zumindest eine Schweißverbindung (8), insbesondere direkt miteinander, verbunden sind, wobei ein erstes Stahlband (6) der zumindest zwei Stahlbänder (6, 7) die Schneide (2) ausformt und ein zweites Stahlband (7) der zumindest zwei Stahlbänder (6, 7) den Rücken (4) ausformt.

## Beschreibung

Die Erfindung betrifft ein Bandstahlmesser und ein Verfahren zur Herstellung dieses Bandstahlmessers mit einer zumindest einer Schneide, mit einem der Schneide gegenüberliegenden Rücken, und mit einem Bandkörper, der zumindest ein Stahlband aufweist.

Für ein Stanzen unterschiedlichster Materialien sind aus dem Stand der Technik Bandstahlmesser bekannt, die in Längsrichtung einen gebogenen Verlauf aufweisen und aus einem einzelnen Stahlband gefertigt werden. Sowohl Schneide als auch Rücken des Bandstahlmessers sind Teil des Stahlbands, was eine effiziente Fertigung ermöglicht. Allerdings ist die Messerhöhe solcher Bandstahlmesser durch die Leistungsgrenzen gängiger Biegemaschinen beschränkt, was ihre Flexibilität und Effizienz bei speziellen Anwendungen reduziert.

Demgegenüber offenbart die AT409494B ein bandförmiges Stanzmesser zum Stanzen dickerer Materialien, bestehend aus einem Trägerteil und einem härteren, dem Trägerteil vorspringenden Schneidteil, das in eine am Trägerteil ausgebildete Ausnehmung eingesetzt und dort stoffschlüssig verbunden wird. Anschließend wird das Messer gebogen sowie die Schneidkante gehärtet und geschliffen. Diese Bauweise erfordert nachteilig eine vergleichsweise hohe Messerdicke, was im Vergleich mit Bandstahlmessern beim Stanzen mehr Kraftaufwand erfordert, mehr Material verdrängt und höhere Reibung und damit Verschleiß verursacht. Zudem können derart dicke Stanzmesser komplexen Biegekonturen oftmals nicht folgen.

Die Erfindung hat sich daher die Aufgabe gestellt, ein aus dem Stand der Technik bekanntes Bandstahlmesser dahingehend weiterzuentwickeln, dass es trotz gleichbleibender Schneidqualität und Standzeit deutlich flexibler und effizienter für spezielle Anwendungen nutzbar ist.

Die Erfindung löst die gestellte Aufgabe hinsichtlich des Bandstahlmessers durch die Merkmale des Anspruchs 1.

Indem der Bandkörper zumindest zwei Stahlbänder aufweist, die mit ihren Flachseiten im Wesentlichen zueinander fluchtend angeordnet sind und welche Stahlbänder über zumindest eine Schweißverbindung verbunden sind, können die von anderen Bandstahlmessern bekannten hervorragenden Eigenschaften hinsichtlich Schneidqualität und Standzeit erhalten bleiben. Gleichzeitig ermöglicht diese Konstruktion jedoch eine höhere Flexibilität und Effizienz bei speziellen Anwendungen.

Die erfindungsgemäße fluchtende Anordnung mehrerer Stahlbänder eröffnet nämlich die Möglichkeit, auch für höhere Bandstahlmesser gängige Biegemaschinen zu verwenden. Dies erlaubt einen wirtschaftlichen Herstellungsprozess, selbst bei hohen Bandstahlmessern. Besonders vorteilhaft ist es, wenn die betreffenden Stahlbänder über die zumindest eine Schweißverbindung direkt miteinander verbunden sind, da dies zusätzliche Teile am Bandstahlmesser überflüssig machen kann.

Zudem kann das erfindungsgemäße Bandstahlmesser trotz seiner Messerhöhe auch einen sauberen Schnitt ermöglichen, da ein erstes Stahlband der zumindest zwei Stahlbänder die Schneide ausformt und ein zweites Stahlband der zumindest zwei Stahlbänder den Rücken ausformt. Beispielsweise besteht der Bandkörper aus zumindest zwei Stahlbändern.

Im Gegensatz zu anderen hohen Messern vereint das erfindungsgemäße Bandstahlmesser somit eine schlanke Bauform für ein verschleißarmes und präzises Stanzen mit der Möglichkeit, höhere Bandstahlmesser kosteneffizient herzustellen.

Vorzugsweise sind die Stahlbänder direkt miteinander verbunden und weisen die Schweißverbindung in ihrem Längsstoß auf. Diese direkte Verbindung der Stahlbänder durch Schweißung gewährleistet unter anderem eine hohe Stabilität sowie präzise Ausrichtung und kann auch eine gleichmäßigere Kraftübertragung zwischen Schneide und Rücken begünstigen. Diese Schweißverbindung kann beispielsweise eine Punktschweißung und/oder eine Längsschweißnaht sein.

Ein Schweißwulst der Schweißverbindung zwischen den Stahlbändern kann für ein schlankes Bandstahlmesser zurücktreten, wenn im Längsstoß zumindest ein Stahlband der beiden aneinanderstoßenden Stahlbänder eine Fase zur Aufnahme eines Schweißzusatzwerkstoffs der Schweißverbindung aufweist. Auch kann solch eine Fase für eine gleichmäßigere Verteilung der Schweißnaht sorgen und kann auch das Schweißen selbst weiter erleichtern.

Beispielsweise greifen im Längsstoß jene beiden aneinanderstoßenden Stahlbänder über zumindest einen Vorsprung an dem einen Stahlband und zumindest einen dazu komplementären Rücksprung an dem anderen Stahlband formschlüssig ineinander. Diese gewährleistet einen präzisen und stabilen Anschluss beider Stahlbänder, wodurch die Lebensdauer des Bandstahlmessers erhöht werden kann. Zudem ermöglicht sie eine gleichmäßige Kraftübertragung und reduziert das Risiko von Spannungsspitzen oder Materialermüdung. Hierbei ist jede Geometrie zu diesem Vorsprung und/oder Rücksprung denkbar.

Vorstellbar ist, dass der Vorsprung im Querschnitt einen konvexen Verlauf aufweist. Alternativ dazu oder zusätzlich ist denkbar, dass der Rücksprung die Form einer Hohlkehle aufweist. Dies kann beispielsweise eine spielfreie Ausrichtung der Stahlbänder ermöglichen, was die Ausrichtung der Schneidkante zum Bandkörper begünstigt. Die Schneide kann damit an allen Stellen gleichzeitig beim Stanzen ins Material eindringen, wodurch sich eine gleichmäßige Schnittbelastung mit vermindertem Verschleiß ergeben kann. Die Standfestigkeit des Bandstahlmessers kann damit weiter verbessert werden.

Vorstellbar ist zudem, dass Vorsprung und komplementärer Rücksprung unterschiedliche Radien aufweisen. Dies vereinfacht nicht nur die fluchtende Ausrichtung der Stahlbänder, sondern erleichtert auch die Fertigung des Bandstahlmessers erheblich.

Komplexen Biegekonturen kann das Bandstahlmesser folgen, wenn das Bandstahlmesser einen Längsabschnitt mit einem in Längsrichtung gekrümmten Verlauf aufweist.

Vorzugsweise weist der Bandkörper eine diesen durchdringende Aussparung mit einer geschlossenen Kontur auf. Diese Aussparung kann als Druckausgleich am Bandstahlmesser wirken und damit durch Spannungsreduktion die Standfestigkeit des Bandstahlmessers weiter erhöhen.

Beispielsweise ist diese Aussparung im Längsstoß der beiden aneinanderstoßenden Stahlbänder angeordnet. Denn dadurch kann am ersten und/oder zweiten Stahlband auch jenes Herstellungsverfahren verwendet werden, das zur Einbringung einer Halteausnehmung im Rücken des Bandstahlmessers zur Aufnahme in einer Trägerplatte verwendet wird. Denn damit kann am ersten und/oder zweiten Stahlband auch jenes Herstellverfahren verwendet werden, das zur Einbringung einer Halteausnehmung im Rücken des Bandstahlmessers zur Aufnahme in einer Trägerplatte verwendet wird. Dies vereinfacht den Herstellungsprozess und ermöglicht eine kosteneffizientere Produktion von vergleichsweise hohen Bandstahlmessern mit hoher Präzision.

Vorzugsweise wird diese Aussparung im ersten Stahlband mit der Schneide vorgesehen. Für diese Aussparung springt das erste, insbesondere ausschließlich das erste, Stahlband zurück.

Spannungsspitzen im vergleichsweise kritischen Anschlussbereich zwischen den Stahlbändern können auf elegante Weise vermieden werden, wenn die Aussparung im gekrümmten Längsabschnitt des Bandstahlmessers angeordnet ist. Dies erhöht die Langlebigkeit und damit die Standfestigkeit des Bandstahlmessers weiter. Beispielsweise ist diese Aussparung am ersten Stahlband im Bereich des Längsstoßes angeordnet. Diese Anordnung trägt zur Stabilität und Zuverlässigkeit des Messers bei, insbesondere in Anwendungen mit hohen mechanischen und thermischen Belastungen.

Vorzugsweise weist die Schneidkante Schneidzähne auf, was eine hohe Präzision und Effizienz beim Stanzen verschiedener Materialien gewährleistet. Die Schneidkante kann hierzu beispielsweise gerade sein. Vorstellbar ist auch, dass die Schneidzähne gerade und/oder ungeschränkt ausgebildet sind.

Dies wird beispielsweise weiter verbessert, wenn die Schneidkante im Bereich von 3 bis 8 Zähnen/Zoll (TPI) aufweist. Diese Feinheit und Dichte der Zähne entlang der Schneidkante sorgen nämlich für einen sauberen Schnitt und minimieren den Verschleiß des Bandstahlmessers, was zu einer längeren Lebensdauer und geringeren Wartungskosten führt.

Für besondere Anwendungen kann für eine ausreichende Schnitthöhe gesorgt werden, wenn das Bandstahlmesser eine Messerhöhe von mehr als 4 Zoll (10,16 cm) aufweist.

Hierzu ist beispielsweise vorstellbar, dass zumindest zwei Stahlbänder des Bandstahlmessers je eine Bandhöhe von größer gleich 2 Zoll aufweisen.

Die Standfestigkeit des Bandstahlmessers kann weiter verbessert werden, wenn die Stahlbänder aus einem zumindest teilweise thermisch behandelten und/oder thermisch vergüteten Stahl bestehen.

Die Präzision des Bandstahlmessers und/oder die Effizienz des Herstellungsprozesses kann beispielsweise gesteigert werden, wenn die Stahlbänder die gleiche Stahlgüte aufweisen.

Die Erfindung hat sich zudem die Aufgabe gestellt, ein vergleichsweise hohes Bandstahlmesser reproduzierbar herzustellen.

Die Erfindung löst die gestellte Aufgabe hinsichtlich des Verfahrens durch die Merkmale des Anspruchs 13.

Zunächst werden ein Stahlband mit einer Schneide an dessen Längskante und ein anderes Stahlband mit einem Rücken an dessen Längskante bereitgestellt.

Nachfolgend werden in einem weiteren Schritt die Stahlbänder mit ihren Flachseiten zueinander im Wesentlichen fluchtend aneinander anschließen angeordnet und dann oder gleichzeitig werden die Stahlbänder über zumindest eine Schweißverbindung, insbesondere direkt, miteinander verbunden. Damit kann reproduzierbar ein exaktes Bandstahlmesser mit einer vergleichsweise hohen Messerhöhe geschaffen werden.

Beispielsweise kann ein präzises Bandstahlmesser hergestellt werden, wenn in Längsrichtung gleich verlaufende Stahlbänder bereitgestellt werden, die zumindest in einem Längsabschnitt von deren Längsabschnitten einen gekrümmten Verlauf aufweisen.

Vorstehendes kann weiter verbessert werden, wenn die Stahlbänder in ihrem Längsstoß mit einer Schweißverbindung, insbesondere Punktschweißung oder Längsschweißnaht, direkt miteinander verbunden werden.

Insbesondere kann das erfindungsgemäße Bandstahlmesser verwendet werden, präzise und standfest eine Verpackung aus einem kartonartigen Material, insbesondere Wabenpappe, herzustellen. Des Bandstahlmessers kann nämlich zum zumindest abschnittsweisen Stanzen einer äußeren Kontur einer Verpackung aus einem Materialbogen, aufweisend ein kartonartiges Material, insbesondere Wabenpappe, oder einer Materialplatte, aufweisend ein kartonartiges Material, insbesondere Wabenpappe, verwendet werden.

In den Figuren ist beispielsweise der Erfindungsgegenstand anhand eines Ausführungsbeispiels näher dargestellt. Es zeigen
- Fig. 1: eine Seitenansicht zu einem abschnittsweise dargestellten Bandstahlmesser,
- Fig. 2: eine Draufsicht des Bandstahlmessers nach Fig. 1,
- Fig. 3a: eine vergrößerte Ansicht zu einem Längsstoß des nach Fig. 1 dargestellten Bandstahlmessers und
- Fig. 3b: eine alternative Ausführung zu dem nach Fig. 3a dargestellten Längsstoß.

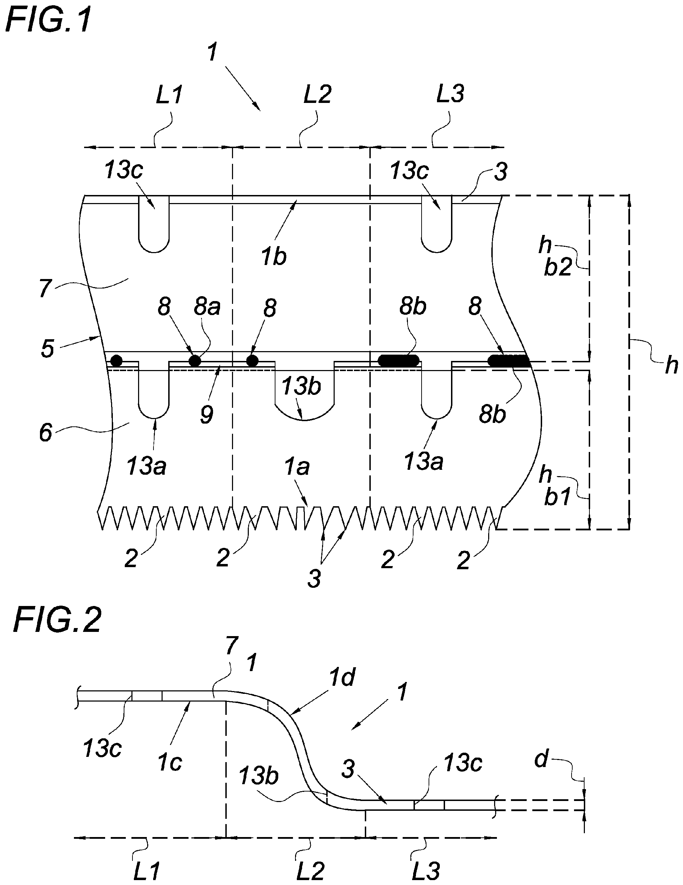

Nach den Figuren 1 und 2 wird ein Bandstahlmesser 1 gezeigt, das auf der einen Längsseite 1a eine Schneide 2 mit einer Schneidkante 3 und auf der anderen zweiten Längsseite 1b einen Rücken 4 aufweist. Dieser Rücken 4 liegt der Schneidkante 3 am Bandstahlmesser 1 gegenüber. Zudem weist das Bandstahlmesser 1 einen Bandkörper 5 auf, der die planen Seitenflanken 1c, 1d des Bandstahlmessers 1 bestimmt.

Um auch vergleichsweise dicke Wabenkartons stanzen zu können, weist das erfindungsgemäße Bandstahlmesser 1 einen Bandkörper 5 aus zwei Stahlbändern 6, 7 auf.

Wie in den Figuren 1, 2, 3a und 3b zu erkennen ist, sind diese zwei Stahlbänder 6, 7 mit ihren Flachseiten 6a, 7a bzw. 6b, 7b zueinander fluchtend angeordnet -dies beispielsweise auch im Wesentlichen fluchtend, um damit diese Stahlbändern 6, 7 (selbst bei einer eventuellen Dickenschwankung an einem oder mehrerer dieser Stahlbänder 6, 7) so anordnen zu können, dass sich plane Seitenflanken 1c, 1d am Bandstahlmesser 1 ergeben.

Die Stahlbänder 6, 7 sind zudem über eine beispielswiese beidseitige Schweißverbindung 8 direkt miteinander verbunden. Dies ist in Fig. 1 anhand mehrerer beispielsweise dargestellter Punktschweißpunkte 8a und der unterbrochenen Längsschweißnaht 8b in ihrem Längsstoß 9 erkennbar.

Damit können am Bandstahlmesser 1 plane Seitenflanken 1c, 1d für eine schlanke Bauform geschaffen werden, die ein kraft- und verschleißarmes Stanzen mit geringer Materialverdrängung ermöglichen. Es ist aber auch eine einseitige Schweißverbindung 8 vorstellbar, was nicht dargestellt worden ist.

Zudem formt das erste Stahlband 6 der zwei Stahlbänder 6,7 die Schneide 2 und das zweite Stahlband 7 der zwei Stahlbänder 6, 7 den Rücken 4 aus. Durch diesen Aufbau kann das erfindungsgemäße Bandstahlmesser 1 in seiner Längsrichtung auch komplexen Biegekonturen folgen.

Selbst ein an den Flachseiten 6a, 7a bzw. 6b, 7b vorspringender Schweißwulst der Schweißverbindung 8 ist nicht erkennbar, da im Längsstoß 9, und zwar am ersten Stahlband 6, je eine Fase 10a, 10b an den Flachseiten 7a, 7b vorgesehen ist, die den Schweißzusatzwerkstoff der Schweißverbindung 8 aufnimmt.

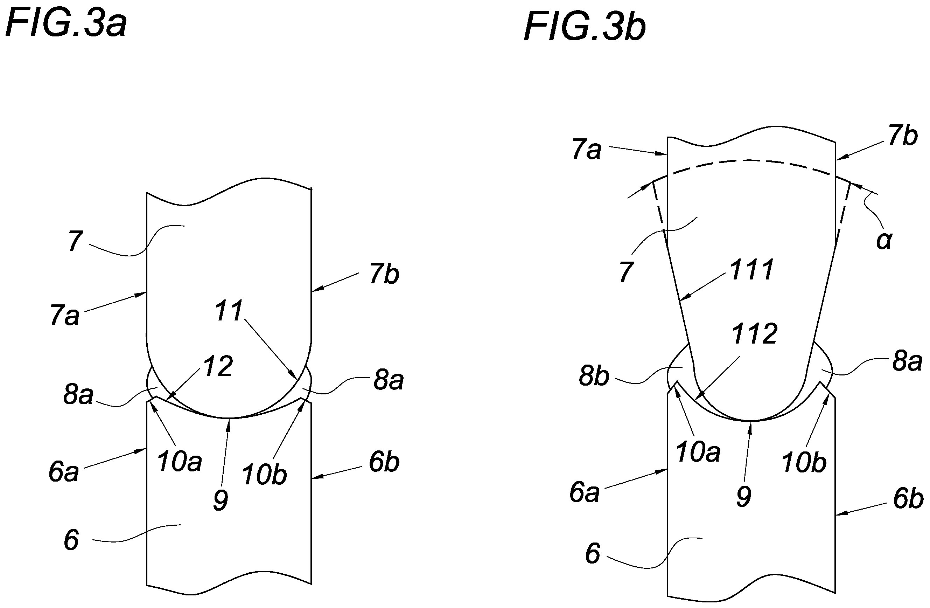

Zudem greifen die Stahlbänder 6, 7 im Längsstoß 9 formschlüssig ineinander. Hierzu weist das zweite Stahlband 7 einen Vorsprung 11 mit einem kreisförmig-konvexen Verlauf und das erste Stahlband 6 einen dazu komplementären kreisförmig-konkaven Rücksprung 12 auf, und zwar in der Form einer Hohlkehle, wie in Fig. 3a zu erkennen ist. Vorsprung 11 und komplementärer Rücksprung 12 weisen zudem unterschiedliche Radien auf. Dies erleichtert das Ausrichten der Flachseiten 6a, 7a bzw. 6b, 7b vor der stoffschlüssigen Verbindung und stärkt zudem den Zusammenhalt der miteinander verschweißten Stahlbänder 6, 7.

Es sind aber auch ein anders verlaufender Vorsprung 111 und/oder Rücksprung 112 denkbar wie beispielsweise in Fig. 3b dargestellt. So läuft der Vorsprung 111 zunächst keilförmig und geht dann an seinem Ende in einen kreisförmig-konvexen Verlauf über. Der Keilwinkel α liegt im Bereich von 12 bis 30 Grad, nämlich wie dargestellt beträgt dieser 24 Grad. Der Vorsprung 111 weist beispielsweise einen Radius von 0,53 mm auf und der zum Vorsprung 111 komplementäre kreisförmig-konkave Rücksprung 112 weist beispielsweise einen Radius von 0,71 mm auf. Zudem weist der Rücksprung 112 an seinen Rändern deutlich ausgeprägtere Fasen 10a, 10b auf, als jene nach Fig. 3a.

Das Bandstahlmesser 1 weist zudem einen gebogenen Verlauf in einem Längsabschnitt L2 der ansonsten gerade verlaufenden Längsabschnitte L1, L2, L3 auf. Der Verlauf des Bandstahlmessers 1 kann aber beliebig sein und wird beispielsweise durch eine äußere Kontur einer Verpackung bestimmt.

Zudem weist das der Bandkörper 5 mehrere durchgehende Aussparungen 13a, 13b mit einer geschlossenen Kontur auf. Diese Aussparungen 13a, 13b dienen als Druckausgleich am Bandstahlmesser 1. Jene im gekrümmten Längsabschnitt L2 vorgesehene durchgehende Aussparung 13b im ersten Stahlband 6 beabstandet die beiden Stahlbänder 6, 7 im Längsstoß 9 voneinander. Damit können Spannungsspitzen im Längsstoß 9 vermieden werden, was die Standfestigkeit des Bandstahlmessers 1 erhöht.

Diese Aussparungen 13a, 13b können in gleicher Weise hergestellt werden wie jene, Halteausnehmung 13c im Rücken 1b des Bandstahlmessers 1 zur Aufnahme in einer nicht näher dargestellten Trägerplatte einer Stanzvorrichtung, beispielsweise Flachbettstanze. Bekanntermaßen ermöglichen diese Halteausnehmungen 13c das Überbrücken von Unterbrechungen, die sich zwischen Schlitzen in der Trägerplatte ergeben, in welchen Schlitze das Bandstahlmesser 1 mit dessen Rücken 4 eingesteckt gehalten ist.

Hervorragende Stanzergebnisse zeigen sich durch die gerade Schneidkante 2a, die über gerade und ungeschränkte Schneidzähnen mit 4 Zähne/Zoll (TPI) verfügt. Diese Konfiguration ermöglicht präzise Schnitte und eine hohe Standfestigkeit des Bandstahlmessers 1.

Zudem ist das Bandstahlmesser 1 vergleichsweise dünn ausgeführt. Hierzu weisen die gleich dicken Stahlbänder 6, 7 je eine Banddicke d von 4 pt (Punkt) auf, was ungefähr 1,41 mm (Millimeter) entspricht.

Zudem wird durch die Verwendung von zwei Stahlbändern 6, 7 mit identischer Stahlgüte eine gleichmäßige Belastung und somit eine höhere Lebensdauer des Bandstahlmessers 1 gewährleistet.

Außerdem ist das Bandstahlmesser 1 vergleichsweise hoch, nämlich 6 Zoll (ca. 15 cm). Dies resultiert daraus, dass die beiden Stahlbänder 6, 7 des Bandstahlmessers 1 jeweils eine Bandhöhe von hb1 bzw. hb2 von 3 Zoll aufweisen.

Die Herstellung ist vergleichsweise handhabungsfreundlich und reproduzierbar.

So werden ein Stahlband 6 mit einer Schneide 2 an dessen Längskante und ein anderes Stahlband 7 mit einem Rücken 4 an dessen Längskante bereitgestellt. Hierzu wird am ersten Stahlband 6 an dessen Längskante eine Schneide 2 mit einer Schneidkante 2a eingebracht und anschließend in jene für das Bandstahlmesser 1 geforderte Form gebogen, um dem gekrümmten Verlauf des Bandstahlmessers 1 im Längsabschnitt L2 zu entsprechen. Am zweiten Stahlband 7 an dessen Längskante ein Rücken 4 hergestellt und anschließend in jene für das Bandstahlmesser 1 geforderte Form gebogen, um dem gekrümmten Verlauf des Bandstahlmessers 1 im Längsabschnitt L2 zu entsprechen.

Danach werden in einem weiteren Schritt die beiden Stahlbänder 6, 7 mit ihren Flachseiten 6a, 7a bzw. 6b, 7b zueinander fluchtend aneinander anschließen angeordnet und über eine Schweißverbindung 8 direkt miteinander verbunden.

Damit kann ein formgenaues und präzises Bandstahlmesser 1 zum Stanzen eines vergleichsweise dicken kartonartigen Materialbogens hergestellt werden.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Bandstahlmesser mit einer zumindest einer Schneide (2), mit einem der Schneide (2) gegenüberliegenden Rücken (4), und mit einem Bandkörper (5), der zumindest ein Stahlband (6, 7) aufweist, **dadurch gekennzeichnet, dass** der Bandkörper (5) zumindest zwei Stahlbänder (6, 7) aufweist, die mit ihren Flachseiten (6a, 7a bzw. 6b, 7b) im Wesentlichen zueinander fluchtend angeordnet sind und welche Stahlbänder (6, 7) über zumindest eine Schweißverbindung (8), insbesondere direkt miteinander, verbunden sind, wobei ein erstes Stahlband (6) der zumindest zwei Stahlbänder (6, 7) die Schneide (2) ausformt und ein zweites Stahlband (7) der zumindest zwei Stahlbänder (6, 7) den Rücken (4) ausformt.

2. Bandstahlmesser nach Anspruch 1, **dadurch gekennzeichnet, dass** die Stahlbänder (6, 7) direkt miteinander verbunden sind und die Schweißverbindung (8), insbesondere Punktschweißung und/oder Längsschweißnaht, in ihrem Längsstoß (9) aufweisen.

3. Bandstahlmesser nach Anspruch 1 oder 2, **dadurch gekennzeichnet, dass** im Längsstoß (9) zumindest ein Stahlband (6) der beiden aneinanderstoßenden Stahlbänder (6, 7) eine Fase (10a, 10b bzw. 110a, 110b) zur Aufnahme eines Schweißzusatzwerkstoffs der Schweißverbindung (8) aufweist.

4. Bandstahlmesser nach einem der Ansprüche 1 bis 3, **dadurch gekennzeichnet, dass** im Längsstoß (9) jene beiden aneinanderstoßenden Stahlbänder (6, 7) über zumindest einen Vorsprung (11) an dem einen Stahlband (7) und zumindest einen dazu komplementären Rücksprung (12) an dem anderen Stahlband (6) formschlüssig ineinandergreifen.

5. Bandstahlmesser nach Anspruch 4, **dadurch gekennzeichnet, dass** der Vorsprung (11) im Querschnitt einen konvexen Verlauf aufweist, und/oder dass der Rücksprung (12) die Form einer Hohlkehle aufweist, und/oder dass Vorsprung (11) und komplementärer Rücksprung (12) unterschiedliche Radien aufweisen.

6. Bandstahlmesser nach einem der Ansprüche 1 bis 5, **dadurch gekennzeichnet, dass** das Bandstahlmesser (1) einen Längsabschnitt (L2) mit einem in Längsrichtung (L) gekrümmten Verlauf aufweist.

7. Bandstahlmesser nach einem der Ansprüche 1 bis 6, **dadurch gekennzeichnet, dass** der Bandkörper (5) eine diesen durchdringende Aussparung (13a, 13b) mit einer geschlossenen Kontur aufweist, wobei die Aussparung (13a, 13b) insbesondere im Längsstoß (9) der beiden aneinanderstoßenden Stahlbänder (6, 7) angeordnet ist.

8. Bandstahlmesser nach Anspruch 7, **dadurch gekennzeichnet, dass** für die Aussparung (13a, 13b) das erste, insbesondere ausschließlich das erste, Stahlband zurückspringt, und/oder dass die Aussparung (13a, 13b) im gekrümmten Längsabschnitt (L2) des Bandstahlmessers (1) angeordnet ist.

9. Bandstahlmesser nach einem der Ansprüche 1 bis 8, **dadurch gekennzeichnet, dass** die, insbesondere gerade, Schneidkante (2a), insbesondere gerade und/oder insbesondere ungeschränkte, Schneidzähne, insbesondere im Bereich von 3 bis 8 Zähnen/Zoll (TPI), aufweist.

10. Bandstahlmesser nach einem der Ansprüche 1 bis 9, **dadurch gekennzeichnet, dass** das Bandstahlmesser (1) eine Messerhöhe (h) von mehr als 4 Zoll aufweist und/oder dass zumindest zwei Stahlbänder (6, 7) des Bandstahlmessers (1) je eine Bandhöhe (hb1, hb2) von größer gleich 2 Zoll aufweisen.

11. Bandstahlmesser nach einem der Ansprüche 1 bis 10, **dadurch gekennzeichnet, dass** die Stahlbänder (6, 7) aus einem zumindest teilweise thermisch behandelten und/oder thermisch vergüteten Stahl bestehen und/oder dass die Stahlbänder (6, 7) die gleiche Stahlgüte aufweisen.

12. Bandstahlmesser nach einem der Ansprüche 1 bis 11, **dadurch gekennzeichnet, dass** die, insbesondere gleich dicken, Stahlbänder (6, 7) je eine Banddicke (d) im Bereich von 1 bis 3 mm, insbesondere von 4 pt, aufweisen.

13. Verfahren zur Herstellung eines Bandstahlmessers (1) nach einem der Ansprüche 1 bis 12, bei dem
ein Stahlband (6) mit einer Schneide (2) an dessen Längskante und ein anderes Stahlband (7) mit einem Rücken (4) an dessen Längskante bereitgestellt werden, und einem weiteren Schritt die Stahlbänder (6, 7) mit ihren Flachseiten (6a, 7a bzw. 6b, 7b) im Wesentlichen zueinander fluchtend aneinander anschließen angeordnet werden und welche Stahlbänder (6, 7) über zumindest eine Schweißverbindung (8), insbesondere direkt, miteinander verbunden werden.

14. Verfahren nach Anspruch 13, **dadurch gekennzeichnet, dass** in Längsrichtung (L) gleich verlaufende Stahlbänder (6, 7), die zumindest in einem Längsabschnitt (L2) von deren Längsabschnitten (L1, L2, L3) einen gekrümmten Verlauf aufweisen.

15. Verfahren nach Anspruch 13 oder 14, **dadurch gekennzeichnet, dass** die Stahlbänder (6, 7) in ihrem Längsstoß (9) mit einer Schweißverbindung (8), insbesondere Punktschweißung oder Längsschweißnaht, direkt miteinander verbunden werden.

16. Verwendung eines Bandstahlmessers (1) nach einem der Ansprüche 1 bis 12 zum zumindest abschnittsweisen Stanzen einer äußeren Kontur einer Verpackung aus einem Materialbogen, aufweisend ein kartonartiges Material, insbesondere Wabenpappe, oder einer Materialplatte, aufweisend ein kartonartiges Material, insbesondere Wabenpappe.
